# EUROPÄISCHE PATENTSCHRIFT

(11) **EP 4 414 795 B1**
(45) Veröffentlichungstag und Bekanntmachung des Hinweises auf die Patenterteilung: **08.04.2026**
(21) Anmeldenummer: 23155887.5
(22) Anmeldetag: 09.02.2023
(51) Int. Cl.: G05B 13/02, G05B 17/02

(54) **VERFAHREN UND SYSTEM ZUM BETRIEB EINES TECHNISCHEN GERÄTS MIT EINEM MODELL AUF BASIS KÜNSTLICHER INTELLIGENZ**
METHOD AND SYSTEM FOR OPERATING A TECHNICAL DEVICE USING AN ARTIFICIAL INTELLIGENCE-BASED MODEL
PROCÉDÉ ET SYSTÈME DE FONCTIONNEMENT D'UN APPAREIL TECHNIQUE À L'AIDE D'UN MODÈLE BASÉ SUR L'INTELLIGENCE ARTIFICIELLE

(43) Veröffentlichungstag der Anmeldung: 14.08.2024
(73) Patentinhaber: Siemens Aktiengesellschaft, 80333 München (DE)
(72) Erfinder: EDER, Jana, 1180 Wien (AT); SCHALL, Daniel, 2020 Hollabrunn (AT); HOLLY, Stephanie, 2000 Stockerau (AT); REZAPOUR LAKANI, Safoura, 1210 Wien (AT)
(74) Vertreter: Siemens Patent Attorneys

(56) Entgegenhaltungen:
- EP-A1- 3 098 681
- EP-A1- 3 751 146
- EP-A1- 3 876 061
- US-A1- 2020 150 601

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts mit einem Modell auf Basis künstlicher Intelligenz, sowie ein Computer-Programm-Produkt.

Geräte im industriellen Umfeld werden häufig mit Modellen auf Basis künstlicher Intelligenz (kurz "KI") betrieben, um beispielsweise eine vorausschauende Wartung durchzuführen. Dies erfolgt indem mithilfe eines Modells aus aktuellen Betriebsparametern, wie beispielsweise Vibrationsdaten, akustische Daten, Strom- oder Spannungsdaten oder ähnliches, ein zukünftiger Betrieb prognostiziert wird.

Ein Modell muss aufwändig trainiert werden und ist dann häufig nur für eine Installation eines Geräts gültig. Wird also ein baugleiches Gerät anders installiert oder angeordnet, so muss nach dem Stand der Technik das Modell erneut aufwändig trainiert werden.

Es ist im Stand der Technik sehr schwierig, ein KI-Modell, das auf einem Gerät, wie einer Pumpe, trainiert wurde, das sich in einer Umgebung befindet, auf das identische oder ähnliche Geräte in einer anderen Umgebung zu übertragen.

Das Umfeld beziehungsweise die Betriebsumgebung bezieht sich beispielsweise auf Einbauzustand, Verschraubung, Bodenbeschaffung oder benachbarte Anlagen. Die Umgebung kann die Daten beeinflussen und führt häufig unerwünscht zu anderen Datenverteilungen in den Messwerten.

Die Veröffentlichung EP 3 751 146 A1 betrifft ein Verfahren zum Trainieren eines maschinellen Lernalgorithmus, welcher mithilfe der Bestimmung eines Schadens eines ersten Kompressors einer Gasturbine die Bestimmung der Funktionsfähigkeit eines zweiten Kompressors der Gasturbine ermöglicht.

Die Veröffentlichung EP 3 098 681 A1 zeigt ein System zur Anomalie-Erkennung für ein auf künstlicher Intelligenz basierendes Gesundheitsmanagement eines Host-Systems, wobei einzigartige Muster überwacht werden, welche in Echtzeit generiert werden, und Systemparameter auf eine Leistung des Host-Systems auf Systemebene hinweisen, und die Muster mit vorgegebener Mustern verglichen werden, welche den Systemparametern entsprechen, um potenzielle Anomalien im Host-System und dessen Subsystemen zu erkennen.

Es ist Aufgabe der Erfindung eine Lösung bereitzustellen, in welcher ein Modell für ein Gerät weiterverwendet werden kann, also unabhängig von der Betriebsumgebung, beispielsweise unabhängig von der Installation.

Die Aufgabe wird durch ein computer-implementiertes Verfahren zum Betrieb eines technischen Geräts mit einem Modell auf Basis künstlicher Intelligenz gelöst, umfassend folgende Schritte:
a) Erfassen eines ersten Betriebsparameters einer Referenz-Vorrichtung, welche baugleich mit dem technischen Gerät ist, mithilfe eines ersten Mess-Mittels in Form eines zeitdiskreten ersten Sensor-Signals in einer ersten Betriebsumgebung und einem ersten zulässigen Betriebsmodus,
b) Erfassen eines zweiten Betriebsparameters der Referenz-Vorrichtung mithilfe eines zweiten Mess-Mittels in Form eines zeitdiskreten zweiten Sensor-Signals in einer zweiten Betriebsumgebung und einem zweiten zulässigen Betriebsmodus,
c) Durchführen einer ersten Fourier-Transformation für das erste Sensor-Signal und einer zweiten Fourier-Transformation für das das zweite Sensor-Signal durch eine Rechenvorrichtung,
d) Ermitteln des Quotienten aus der ersten Fourier-Transformation und der zweiten Fourier-Transformationen als Transferfunktion durch die Rechenvorrichtung,
e) Erzeugen und Trainieren eines ersten Modells auf Basis künstlicher Intelligenz für die Referenz-Vorrichtung in der ersten Betriebsumgebung durch die Rechenvorrichtung,
f) Erzeugen eines zweiten Modells auf Basis künstlicher Intelligenz für das technische Gerät in der zweiten Betriebsumgebung unter Verwendung des ersten Modells und Anwendung der Transferfunktion durch die Rechenvorrichtung,
g) Betreiben des technischen Geräts mit dem zweiten Modell durch die Rechenvorrichtung.

Dadurch ist es möglich ein KI-Modell beispielsweise in einer Laborumgebung zu trainieren und dieses KI-Modell dann auf eine Neuinstallation in einer hohen Genauigkeit des Modells zu übertragen, ohne dass das Modell angepasst oder neu trainiert werden muss (Plug & Classify).

Dies ermöglicht die Skalierung von KI-Modellen in industriellen Anwendungen, indem Modelle ohne Mehraufwand wiederverwenden werden können.

Auch wenn im vorliegenden Zusammenhang das Verfahren zum Betrieb eines technischen Geräts mit einem Modell auf Basis künstlicher Intelligenz beschrieben ist, wird darauf hingewiesen, dass ebenso ein statistisches Modell im genannten Verfahren zur Anwendung geeignet ist und daher eine äquivalente Verwendung darstellt.

Es versteht sich, dass die beschriebene Methodik von einer einzigen eine Referenz-Pumpe auf eine beliebige Anzahl von baugleichen Pumpen in verschiedenen Betriebsumgebungen übertragen lässt.

Unter den Begriff eines baugleichen technischen Geräts fallen alle äquivalenten Ausführungsformen, die im Wesentlichen in Funktion und realer Ausführung einander entsprechen oder ähnlich sind, also beispielsweise dieselben technischen Objekt- und Betriebs-Kenngrößen (wie Stromaufnahme, Leistung, Gewicht, Volumen, etc.) einer Pumpe aufweisen.

Betriebsumgebungen können beispielsweise die Montage des technischen Geräts, sowie eine Leitungsführung oder auch Einflüsse benachbarter Vorrichtungen abbilden.

Die Mess-Mittel können durch Mess-Vorrichtungen mit entsprechenden Sensoren gebildet sein.

Das Training der Referenz-Vorrichtung kann alle Betriebsfälle umfassen, sowohl zulässige Betriebsmodi, als auch unzulässige Betriebsmodi, welche beispielsweise eine Betriebsanomalie hervorrufen können.

Die Fourier-Transformation kann eine Filter-Funktion bilden, welche auf Durchschnittswerten der Sensor-Signale basiert. Die Bildung von Durchschnittswerten ist nicht zwingend notwendig, verbessert jedoch weiter die Genauigkeit des erhaltenen Modells.

In einer Weiterbildung der Erfindung ist es vorgesehen, dass der erste zulässige Betriebsmodus dem zweiten zulässigen Betriebsmodus entspricht.

Dadurch kann die Genauigkeit des zweiten Modells weiter verbessert werden.

In einer Weiterbildung der Erfindung ist es vorgesehen, dass die Anwendung der Transferfunktion eine Multiplikation im Frequenzbereich umfasst.

Dadurch kann auf einfache Weise die Berechnung verbessert werden, da deutlich weniger Multiplikations-Operationen benötigt werden als bei einer Multiplikation im Zeitbereich. Diese Operation entspricht einer Faltung im Zeitbereich.

Die erfindungsgemäße Aufgabe wird auch durch ein System zum Betrieb eines technischen Geräts mit einem Modell auf Basis künstlicher Intelligenz gelöst, umfassend
- eine Referenz-Vorrichtung, welche baugleich mit dem technischen Gerät ist,
- ein erstes Mess-Mittel zum Erfassen eines ersten Betriebsparameters der Referenz-Vorrichtung in einer ersten Betriebsumgebung und einem ersten zulässigen Betriebsmodus,
- ein zweites Mess-Mittel zum Erfassen eines zweiten Betriebsparameters der Referenz-Vorrichtung in einer zweiten Betriebsumgebung und einem zweiten zulässigen Betriebsmodus,
- eine Rechenvorrichtung mit einem Prozessor und einem Speicher,
wobei die Rechenvorrichtung auch dazu eingerichtet ist, das technische Gerät zu betreiben, und das System dazu konfiguriert ist, das Verfahren nach einem der vorhergehenden Ansprüche auszuführen.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: eine schematische Darstellung eines Systems zum Betrieb eines technischen Geräts mit einem Modell auf Basis künstlicher Intelligenz mit den jeweiligen Eingangsgrößen,
- Fig. 2: ein Flussdiagramm des erfindungsgemäßen Verfahrens,
- Fig. 3: ein vereinfachtes Flussdiagramm des erfindungsgemäßen Verfahrens.

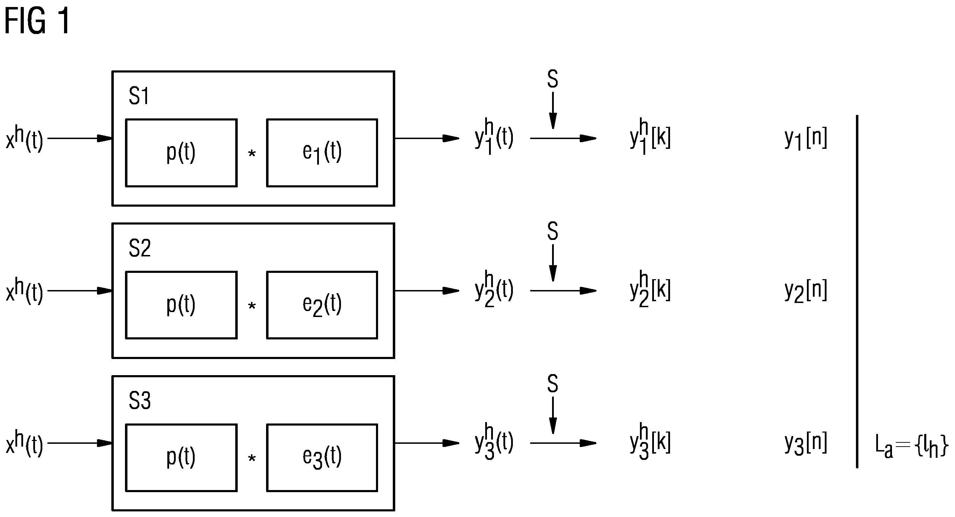

**Fig. 1** zeigt eine schematische Darstellung eines Systems zum Betrieb eines technischen Geräts mit einem Modell auf Basis künstlicher Intelligenz mit den jeweiligen Eingangsgrößen.

In diesem Ausführungsbeispiel sin drei Systeme S1-S3 sind durch entsprechende KI-Modelle abgebildet.

Die Systeme umfassen jeweils eine baugleiche Pumpe P, welche durch ein Pumpen-Modell p(t) repräsentiert ist, sowie eine jeweils eigene Betriebsumgebung E1-E3, welche durch jeweils eigene Betriebsumgebungs-Modelle e₁(t), e₂(t), e₃(t) abgebildet sind.

Den Systemen S1-S3 werden dieselben Eingangssignale x^{h}(t) zugeführt und individuelle zeitkontinuierliche Ausgangssignale y₁^{h}(t), y₂^{h}(t), y₃^{h}(t) durch die Systeme S1-S3 gebildet.

Durch Abtasteinheiten S werden von den zeitkontinuierlichen Ausgangssignale y₁^{h}(t), y₂^{h}(t), y₃^{h}(t) zeitdiskrete Ausgangsignale y₁^{h}[k], y₂^{h}[k], y₃^{h}[k] abgeleitet.

Als Bedingung für diese Verfahrensschritte gilt, dass für die Systeme S1-S3 gilt, insbesondere für die Betriebsumgebungen Lₐ der Pumpen P, dass sie Elemente des zeitdiskreten Ausgangssignals y₁[n], y₂[n], y₃[n] jeweils in einer zulässigen Betriebsumgebung lₕ erfasst werden, also beispielsweise keine Betriebsanomalie darstellen.

Unter einer zulässigen Betriebsumgebung wird beispielsweise ein zulässiger Betriebstemperaturbereich, ein zulässiger Betriebsfeuchtigkeitsbereich, ein zulässigen Drehzahlbereich oder Drehmomentbereich einer Pumpe, eine zulässige Strom- oder Leistungsaufnahme verstanden.

Unter Betriebsparametern wird beispielsweise ein Temperaturwert, ein Strom, eine Spannung, eine Vibrationskenngröße, eine akustische Kenngröße oder dergleichen für ein technisches Gerät verstanden, welche mit entsprechenden Sensoren oder mithilfe indirekter Verfahren, wie bildgebende Verfahren, ermittelt werden.

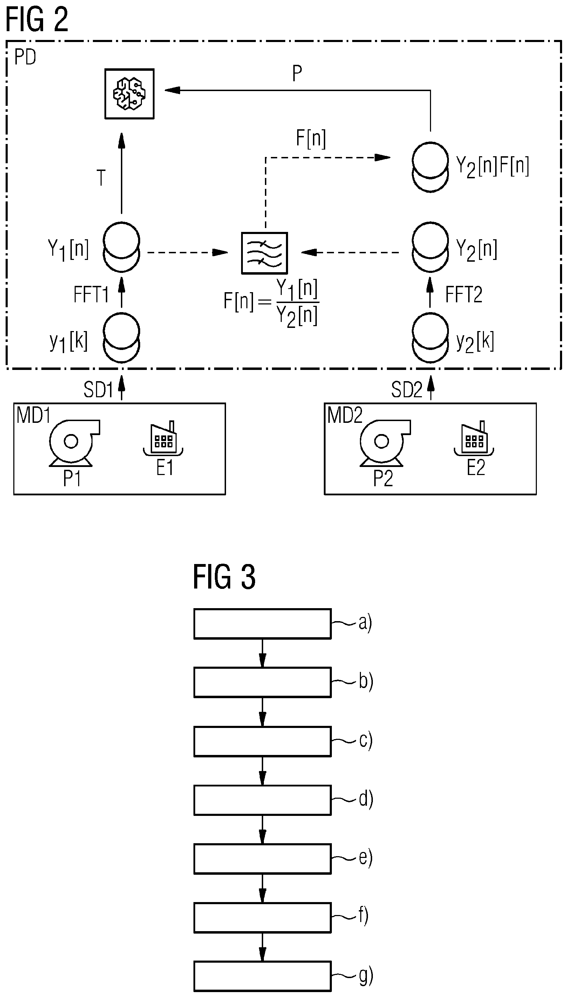

**Fig. 2** stellt ein Beispiel für Flussdiagramm des erfindungsgemäßen Verfahrens dar, wobei die Ausführungen der vorhergehenden Figur entsprechend gelten.

Von einer ersten Pumpe P1 werden in einer ersten Betriebsumgebung E1 zeitdiskrete erste Sensor-Daten SD1 erfasst, als zeitdiskretes erstes Sensor-Signal y₁[k] mit k Elementen und durch eine erste Fourier-Transformation FFT1, insbesondere durch eine Fast-Fourier-Transformation, berechnetes Spektrum als Fourier-transformiertes erstes Sensor-Signal Y₁[n] gespeichert.

Im vorliegenden Zusammenhang kann statt einer Fast-Fourier-Transformation beispielweise ebenso eine z-Transformation, eine Diskrete Fourier-Transformation oder eine diskrete Cosinus-Transformation verwendet werden.

Die erste Pumpe P1 bildet eine Referenz-Pumpe, anhand derer für weitere Pumpen ein sehr genaues Betriebs-KI-Modell berechnet werden kann, ohne dass für diese weiteren Pumpen selbst ein Modell erneut trainiert werden muss.

Von einer zweiten Pumpe P2, welche baugleich mir der ersten Pumpe P1 ist, werden in einer ersten Betriebsumgebung E1 zeitdiskrete zweite Sensor-Daten SD2 erfasst, als zeitdiskretes zweites Sensor-Signal y₂[k] mit k Elementen und durch eine zweite Fourier-Transformation FFT2, insbesondere durch eine Fast-Fourier-Transformation, berechnetes Spektrum als Fourier-transformiertes zweites Sensor-Signal Y₂[n] gespeichert.

Von einer Rechenvorrichtung mit einem Prozessor und einem Speicher wird nun der Quotient des Fourier-transformierten ersten Sensor-Signals Y₁[n] und des Fourier-transformierten zweiten Sensor-Signals Y₂[n] gebildet und als Transferfunktion F[n] mit n Elementen gespeichert.

Wird nun für die erste Pumpe P1 ein Betriebs-KI-Modell erzeugt und in einem Trainingsvorgang T trainiert, insbesondere mir zulässigen und unzulässigen Betriebsumgebungen, in welchen Anomalien auftreten können, so kann dieses trainierte Modell auf andere Pumpen, wie in diesem Beispiel die zweite Pumpe P2 übertragen werden, ohne erneut das Modell zu trainieren.

Nun kann für die zweite Pumpe P2 mithilfe der Transferfunktion F[n] ein KI-Modell bestimmt werden, ohne dass für die zweite Pumpe P2 ein KI-Modell trainiert werden muss, und für eine genaue Prädiktion P des Betriebszustands der zweiten Pumpe P2 verwendet werden.

Die Figur stellt auch ein entsprechendes System zum Betrieb eines technischen Geräts P2 mit einem Modell auf Basis künstlicher Intelligenz dar.

Es ist eine Referenz-Vorrichtung in Form der Pumpe P1 umfasst, welche baugleich mit dem technischen Gerät in Form der Pumpe P2 ist,
Ferner ist ein erstes Mess-Mittel MD1 zum Erfassen eines ersten Betriebsparameters der Referenz-Vorrichtung in einer ersten Betriebsumgebung und einem ersten zulässigen Betriebsmodus umfasst.

Außerdem ist ein zweites Mess-Mittel MD2 zum Erfassen eines zweiten Betriebsparameters der Referenz-Vorrichtung in einer zweiten Betriebsumgebung und einem zweiten zulässigen Betriebsmodus,

Es ist vom System auch eine Rechenvorrichtung PD mit einem Prozessor und einem Speicher enthalten, welche dazu eingerichtet ist, das technische Gerät zu betreiben. Es ist klar, dass die Rechenvorrichtung PD als verteiltes System ausgelegt sein kann.

**Fig. 3** zeigt ein Beispiel für ein vereinfachtes Flussdiagramm des erfindungsgemäßen Verfahrens.

In dem computer-implementiertes Verfahren zum Betrieb eines technischen Geräts mit einem Modell auf Basis künstlicher Intelligenz sind folgende Schritte umfasst:
a) Erfassen eines ersten Betriebsparameters einer Referenz-Vorrichtung P1, welche baugleich mit dem technischen Gerät P2 ist, mithilfe eines ersten Mess-Mittels MD1 in Form eines zeitdiskreten ersten Sensor-Signals in einer ersten Betriebsumgebung E1 und einem ersten zulässigen Betriebsmodus,
b) Erfassen eines zweiten Betriebsparameters der Referenz-Vorrichtung P1 mithilfe eines zweiten Mess-Mittels MD2 in Form eines zeitdiskreten zweiten Sensor-Signals in einer zweiten Betriebsumgebung E2 und einem zweiten zulässigen Betriebsmodus,
c) Durchführen einer ersten Fourier-Transformation FFT1 für das erste Sensor-Signal und einer zweiten Fourier-Transformation FFT1 für das das zweite Sensor-Signal durch eine Rechenvorrichtung PD,
d) Ermitteln des Quotienten aus der ersten Fourier-Transformation und der zweiten Fourier-Transformationen als Transferfunktion F durch die Rechenvorrichtung PD,
e) Erzeugen und Trainieren eines ersten Modells auf Basis künstlicher Intelligenz für die Referenz-Vorrichtung P1 in der ersten Betriebsumgebung E1 durch die Rechenvorrichtung PD,
f) Erzeugen eines zweiten Modells auf Basis künstlicher Intelligenz für das technische Gerät P2 in der zweiten Betriebsumgebung E2 unter Verwendung des ersten Modells und Anwendung der Transferfunktion F durch die Rechenvorrichtung PD,
g) Betreiben des technischen Geräts P2 mit dem zweiten Modell durch die Rechenvorrichtung PD.

Der erste zulässige Betriebsmodus entspricht in diesem Beispiel dem zweiten zulässigen Betriebsmodus, um eine besonders hohe Genauigkeit des Pumpen-Modells zu erhalten.

In einem bevorzugten Aufführungsbeispiel umfasst die Anwendung der Transferfunktion eine Multiplikation im Frequenzbereich, wodurch die Anzahl der notwendigen Multiplikationen durch eine Rechenvorrichtung reduziert wird.

### Bezugszeichenliste:

- e₁(t), e₂(t), e₃(t): Modell für Betriebsumgebung der Pumpe
- E1, E2: Betriebsumgebung
- F[n]: Transferfunktion mit n Elementen
- FFT1, FFT2: Fast-Fourier-Transformation
- Lₐ: Betriebsumgebung der Pumpe
- lₕ: zulässige Betriebsumgebung für Pumpe
- MD1, MD2: Mess-Mittel
- P: Prädiktion
- p(t): Modell für Pumpe
- P1, P2: Pumpe
- PD: Rechenvorrichtung mit Prozessor und Speicher
- S: Abtastung
- S1-S3: System
- SD1, SD2: Sensor-Daten
- T: Training des KI-Modells
- x^{h}(t): Eingangssignal
- y₁[k], y₂[k]: zeitdiskretes Sensor-Signal mit k Elementen
- Y₁[n], Y₂[n]: transformiertes Sensor-Signal im Frequenzbereich mit n Elementen
- y₁[n], y₂[n], y₃[n]: Elemente des zeitdiskreten Ausgangssignals
- y₁^{h}(t), y₂^{h}(t), y₃^{h}(t): Ausgangssignal, zeitkontinuierlich
- y₁^{h}[k], y₂^{h}[k], y₃^{h}[k]: Ausgangsignal, zeitdiskret

## Patentansprüche

1. Computer-implementiertes Verfahren zum Betrieb eines technischen Geräts (P2) mit einem Modell auf Basis künstlicher Intelligenz, umfassend folgende Schritte:
a) Erfassen eines ersten Betriebsparameters einer Referenz-Vorrichtung (P1), welche baugleich mit dem technischen Gerät (P2) ist, mithilfe eines ersten Mess-Mittels (MD1) in Form eines zeitdiskreten ersten Sensor-Signals in einer ersten Betriebsumgebung (E1) und einem ersten zulässigen Betriebsmodus,
b) Erfassen eines zweiten Betriebsparameters der Referenz-Vorrichtung (P1) mithilfe eines zweiten Mess-Mittels (MD2) in Form eines zeitdiskreten zweiten Sensor-Signals in einer zweiten Betriebsumgebung (E2) und einem zweiten zulässigen Betriebsmodus,
c) Durchführen einer ersten Fourier-Transformation (FFT1) für das erste Sensor-Signal und einer zweiten Fourier-Transformation (FFT2) für das das zweite Sensor-Signal durch eine Rechenvorrichtung (PD),
d) Ermitteln des Quotienten aus der ersten Fourier-Transformation und der zweiten Fourier-Transformationen als Transferfunktion (F) durch die Rechenvorrichtung (PD),
e) Erzeugen und Trainieren eines ersten Modells auf Basis künstlicher Intelligenz für die Referenz-Vorrichtung in der ersten Betriebsumgebung (E1) mit zulässigen und unzulässigen Betriebsumgebungen durch die Rechenvorrichtung (PD),
f) Erzeugen eines zweiten Modells auf Basis künstlicher Intelligenz für das technische Gerät (P2) in der zweiten Betriebsumgebung (E2) unter Verwendung des ersten Modells und Anwendung der Transferfunktion (F) durch die Rechenvorrichtung (PD),
g) Betreiben des technischen Geräts (P2) mit dem zweiten Modell durch die Rechenvorrichtung (PD),
wobei die jeweiligen Betriebsparameter in den Schritten a) und b) jeweils in einer zulässigen Betriebsumgebung erfasst werden, und die jeweiligen Betriebsumgebungen (E1, E2) durch jeweils eigene Betriebsumgebungs-Modelle abgebildet sind.

2. Verfahren nach dem vorhergehenden Anspruch, wobei der erste zulässige Betriebsmodus dem zweiten zulässigen Betriebsmodus entspricht.

3. Verfahren nach einem der vorhergehenden Ansprüche, wobei die Anwendung der Transferfunktion eine Multiplikation im Frequenzbereich umfasst.

4. System zum Betrieb eines technischen Geräts mit einem Modell auf Basis künstlicher Intelligenz, umfassend
• eine Referenz-Vorrichtung, welche baugleich mit dem technischen Gerät ist,
• ein erstes Mess-Mittel zum Erfassen eines ersten Betriebsparameters der Referenz-Vorrichtung in einer ersten Betriebsumgebung und einem ersten zulässigen Betriebsmodus,
• ein zweites Mess-Mittel zum Erfassen eines zweiten Betriebsparameters der Referenz-Vorrichtung in einer zweiten Betriebsumgebung und einem zweiten zulässigen Betriebsmodus,
• eine Rechenvorrichtung mit einem Prozessor und einem Speicher,
wobei die Rechenvorrichtung auch dazu eingerichtet ist, das technische Gerät zu betreiben, und das System dazu konfiguriert ist, das Verfahren nach einem der vorhergehenden Ansprüche auszuführen.

5. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 3 auszuführen.

## Claims

1. Computer-implemented method for operating a technical device (P2) with a model based on artificial intelligence, comprising the following steps:
a) Detecting a first operating parameter of a reference apparatus (P1), which is constructed identically to the technical device (P2), with the aid of a first measuring means (MD1) in the form of a time-discrete first sensor signal in a first operating environment (E1) and a first permissible operating mode,
b) Detecting a second operating parameter of the reference apparatus (P1) with the aid of a second measuring means (MD2) in the form of a time-discrete second sensor signal in a second operating environment (E2) and a second permissible operating mode,
c) Performing a first Fourier transform (FFT1) for the first sensor signal and a second Fourier transform (FFT2) for the second sensor signal by means of a computing apparatus (PD),
d) Determining the quotient from the first Fourier transform and the second Fourier transform as a transfer function (F) by means of the computing apparatus (PD),
e) Generating and training a first model on the basis of artificial intelligence for the reference apparatus in the first operating environment (E1) with permissible and impermissible operating environments by means of the computing apparatus (PD),
f) Generating a second model on the basis of artificial intelligence for the technical device (P2) in the second operating environment (E2) using the first model and applying the transfer function (F) by means of the computing apparatus (PD),
g) Operating the technical device (P2) with the second model by means of the computing apparatus (PD),
wherein the respective operating parameters in steps a) and b) are detected in a permissible operating environment in each case and the respective operating environments (E1, E2) are mapped by their own operating environment models in each case.

2. Method according to the preceding claim, wherein the first permissible operating mode corresponds to the second permissible operating mode.

3. Method according to one of the preceding claims, wherein the application of the transfer function comprises a multiplication in the frequency range.

4. System for operating a technical device with a model based on artificial intelligence, comprising
• a reference apparatus, which is constructed identically to the technical device,
• a first measuring means for detecting a first operating parameter of the reference apparatus in a first operating environment and a first permissible operating mode,
• a second measuring means for detecting a second operating parameter of the reference apparatus in a second operating environment and a second permissible operating mode,
• a computing apparatus with a processor and a memory,
wherein the computing apparatus is also designed to operate the technical device and the system is configured to implement the method according to one of the preceding claims.

5. Computer program product having machine-readable instructions stored therein, which, when executed by a processing unit, trigger this to execute the method according to one of claims 1 to 3.

## Revendications

1. Procédé mis en œuvre par ordinateur pour faire fonctionner un appareil technique (P2) à l'aide d'un modèle basé sur l'intelligence artificielle, comprenant les étapes suivantes :
a) Saisie d'un premier paramètre de fonctionnement d'un dispositif de référence (P1) de même conception que l'appareil technique (P2) à l'aide d'un premier moyen de mesure (MD1) sous forme d'un premier signal de capteur chronologiquement ponctuel dans un premier environnement de fonctionnement (E1) et un premier mode de fonctionnement autorisé
b) Saisie d'un second paramètre de fonctionnement du dispositif de référence (P1) à l'aide d'un second moyen de mesure (MD2) sous forme d'un second signal de capteur chronologiquement ponctuel dans un second environnement de fonctionnement (E2) et un second mode de fonctionnement autorisé
c) Réalisation d'une première transformée de Fourier (FFT1) pour le premier signal de capteur et d'une seconde transformée de Fourier (FFT2) pour le second signal de capteur par un calculateur (PD),
d) Détermination du quotient de la première transformée de Fourier et de la seconde transformée de Fourier en tant que fonction de transfert (F) pour le calculateur (PD),
e) Production et entraînement d'un premier modèle basé sur l'intelligence artificielle pour le dispositif de référence dans le premier environnement de fonctionnement (E1) avec des conditions de fonctionnement autorisée et non autorisée par le calculateur (PD),
f) Production d'un second modèle basé sur l'intelligence artificielle pour l'appareil technique (P2) dans le second environnement de fonctionnement (E2) en utilisant le premier modèle et en mettant en œuvre la fonction de transfert (F) par le calculateur (PD),
g) Fonctionnement de l'appareil technique (P2) avec le second modèle par le calculateur (PD),
dans lequel les paramètres de fonctionnement respectifs aux étapes a) et b) sont saisis respectivement dans un environnement autorisé, et les environnements de fonctionnement respectifs (E1, E2) sont illustrés par des modèles propres respectifs d'environnement de fonctionnement.

2. Procédé selon la revendication précédente, dans lequel le premier modèle autorisé correspond au second mode de fonctionnement autorisé.

3. Procédé selon l'une des revendications précédentes, dans lequel l'utilisation de la fonction de transfert comprend une multiplication dans la gamme de fréquence.

4. Système pour faire fonctionner un appareil technique à l'aide d'un modèle basé sur l'intelligence artificielle, comprenant :
• un dispositif de référence de même conception que l'appareil technique,
• un premier moyen de mesure pour saisir un premier paramètre de fonctionnement du dispositif de référence dans un premier environnement de fonctionnement et un premier mode de fonctionnement autorisé,
• un second moyen de mesure pour saisir un second paramètre de fonctionnement du dispositif de référence dans un second environnement de fonctionnement et un second mode de fonctionnement autorisé,
• un calculateur avec un processeur et une mémoire,
dans lequel le calculateur est également destiné à faire fonctionner l'appareil technique et le système est également configuré pour réaliser le procédé selon l'une des revendications précédentes.

5. Produit de programme informatique contenant des instructions enregistrées lisibles par machine qui, si elles sont réalisées par une unité de traitement, leur permettent de réaliser le procédé selon l'une des revendications 1 à 3.
